# DEMANDE DE BREVET EUROPEEN

(11) **EP 4 682 908 A1**
(43) Date de publication de la demande: **21.01.2026**
(21) Numéro de dépôt: 25190511.3
(22) Date de dépôt: 18.07.2025
(51) Int. Cl.: H01B 3/44, H01B 9/02, C08L 23/20, H01B 3/28, H01B 7/02

(54) **CABLE ELECTRIQUE COMPRENANT UNE COUCHE ISOLANTE THERMOPLASTIQUE A BASE D'UN POLYMERE DE PROPYLENE HETEROPHASIQUE**

(30) Priorité: 19.07.2024 FR 2407993
(71) Demandeur: Nexans, 92400 Courbevoie (FR)
(72) Inventeur: PEREGO, Gabriele, 20144 MILAN (IT); MAZEL, Christelle, 38300 RUY (FR)
(74) Mandataire: Cabinet Boettcher

(57) **Abrégé**

La présente invention a pour objet un câble électrique (1) comprenant au moins une couche électriquement isolante (3) entourant au moins un élément électriquement conducteur allongé (2), où ladite couche isolante (3) est obtenue à partir d'une composition polymère thermoplastique comprenant plus de 10% en poids d'un copolymère de propylène hétérophasique comprenant une phase continue thermoplastique à base d'au moins un homo- ou co-polymère de propylène et une phase élastomère dispersée dans cette phase continue thermoplastique.

## Description

La présente invention a trait au domaine des câbles électriques et elle concerne plus spécifiquement celui des couches électriquement isolantes polymères présentes dans ces câbles. L'invention concerne plus précisément une couche isolante polymère obtenue à partir d'une composition polymère spécifique, qui assure à la couche isolante de bonne performances électriques et mécaniques et notamment une bonne flexibilité.

L'invention s'applique typiquement aux câbles électriques destinés au transport d'énergie, et notamment aux câbles d'énergie à basse tension (à savoir véhiculant un courant continu ou alternatif ayant typiquement une tension inférieure ou égale à 6 kV), et qui peuvent par exemple être employés dans les domaines du transport d'électricité aérien, sous-marin, terrestre, ou encore dans l'aéronautique.

Un câble de transport d'énergie à basse tension comprend de préférence :
- un élément électriquement conducteur allongé (par exemple un fil ou un ensemble de fils toronés ensemble), notamment en cuivre ou en aluminium ;
- une couche électriquement isolante entourant ledit élément électriquement conducteur allongé ; et
- éventuellement une gaine de protection électriquement isolante entourant ladite couche électriquement isolante.

Les couches isolantes de tels câbles étaient historiquement à base de polyéthylène, notamment à base d'éthylène réticulé (XLPE) qui présentent l'inconvénient de ne pas pouvoir être recyclés. Plus récemment, il a été proposé des couches isolantes thermoplastiques non réticulées, typiquement à base de mélanges thermoplastiques de polyéthylène et de polypropylène recyclables.

Dans ce cadre, il a notamment été décrit dans la demande WO2022/129814 des compositions polymères thermoplastiques non réticulées bien adaptées pour la constitution de couches isolantes pour des câbles à basse tension, qui comprennent (i) au moins 50% en poids d'un polymère de propylène homophasique ; (ii) au moins un polymère d'éthylène homophasique présent en en une proportion inférieure à celle du polymère de propylène homophasique et ayant un module élastique de plus de 300 MPa et, (iii) optionellement, jusqu'à 10% en poids au maximum d'un copolymère de propylène hétérophasique. WO2022/129814 indique que, lorsqu'il est présent, le copolymère de propylène hétérophasique permet d'obtenir une meilleure compatibilité entre le polymère de propylène homophasique et le polymère d'éthylène homophasique.

Bien qu'elles soient très bien adaptées pour la constitution de couches isolantes dans des câbles à basse tension pouvant fonctionner à des températures supérieures à 70°C et qu'elles présentent de très bonnes performance thermomécaniques et électriques, les compositions de WO2022/129814 présentent néanmoins des performances moindres en termes de flexibilité.

Un but de la présente invention est de fournir des compositions polymères bien adaptées pour la constitution de couches isolantes de câbles à basse tension, et présentant notamment des performances thermomécaniques et électriques adéquates, et qui présentent en outre une meilleure flexibilité que celle des couches décrites dans la demande WO2022/129814 précitée.

A cet effet, la présente invention propose d'employer une composition polymère comprenant un polymère de propylène hétérophasique du type de ceux envisagés à titre d'additif compatibilisant dans la demande WO2022/129814, mais en employant ce copolymère non pas comme un agent de compatibilisation entre deux autres polymères incompatibles comme cela est fait dans WO2022/129814, mais en employant ce copolymère comme un polymère constitutif de la composition, notamment avec des teneurs bien plus élevées que celles envisagées dans WO2022/129814.

Plus précisément, la présente invention a pour objet un câble électrique de transport d'énergie basse tension comprenant au moins une couche électriquement isolante entourant au moins un élément électriquement conducteur allongé, où la couche électriquement isolante est directement en contact physique avec l'élément électriquement conducteur allongé, où ladite couche isolante est obtenue à partir d'une composition polymère thermoplastique exempte de liquide diélectrique, la composition comprenant plus de 10% en poids d'un copolymère de propylène hétérophasique par rapport au poids total de polymères dans la composition polymère thermoplastique.

Selon un autre aspect, la présente invention a pour objet un procédé d'application d'une couche de revêtement thermoplastique autour d'au moins un élément électriquement conducteur allongé, ledit procédé comprenant l'application, notamment par extrusion, d'une composition polymère comprenant plus de 10% en poids d'un copolymère de propylène hétérophasique par rapport au poids total de polymères dans la composition polymère thermoplastique.

Selon un aspect particulier, la couche isolante est obtenue à partir d'une composition polymère thermoplastique comprenant au moins 90% en poids, par exemple au moins 95% en poids, de copolymère de propylène hétérophasique par rapport au poids total de polymères dans la composition polymère hétérophasique.

Selon un premier mode de réalisation intéressant, la couche isolante du câble selon l'invention est obtenue à partir d'une composition polymère thermoplastique comprenant le copolymère de propylène hétérophasique à titre d'unique polymère (ou sensiblement à titre d'unique polymère). Selon ce mode de réalisation, la composition comprend typiquement le copolymère de propylène hétérophasique à hauteur d'au moins 90% en poids, de préférence au moins 95%, voire au moins 98% en poids et plus préférentiellement au moins 99% en poids par rapport au poids total de polymères dans la composition polymère (la composition pouvant éventuellement contenir une très faible proportion d'un ou plusieurs autres polymères, par exemple à titre d'additifs ou d'impuretés). Selon une variante particulière, la composition polymère comprend le copolymère de propylène hétérophasique à titre d'unique polymère (à une teneur de 100% en poids par rapport au poids total de polymères dans la composition polymère), à l'exclusion de tout autre polymère dans la composition.

Selon un deuxième mode de réalisation possible, la couche isolante est obtenue à partir d'une composition polymère thermoplastique obtenue par mélange du copolymère de propylène hétérophasique avec un polymère de propylène homophasique. Selon ce mode de réalisation le copolymère de propylène hétérophasique est de préférence présent à une teneur bien supérieure à 10% en poids par rapport au poids total des polymères du mélange et le polypropylène homophasique est à une teneur bien inférieure à 90%.Typiquement, la composition polymère selon ce deuxième mode de réalisation est obtenue à partir d'un mélange comprenant le copolymère de propylène hétérophasique à une teneur de 15% à 90% en poids (par exemple entre 20 et 80% en poids ou entre 25 et 70% en poids), cette teneur pouvant par exemple être d'au moins 30% en poids, notamment d'au moins 40% en poids, voire d'au moins 50% en poids par rapport à la masse totale des polymères de la composition . Selon ce deuxième mode de réalisation, la composition comprend généralement le polypropylène homophasique à une teneur de 10 à 85% ou moins en poids (par exemple entre 20 et 80% en poids ou entre 20 et 75% en poids) cette teneur pouvant par exemple être inférieure ou égale à 70% en poids, notamment inférieure ou égale à 60% en poids, notamment inférieure ou égale à 50% en poids par rapport à la masse totale des polymères de la composition. La composition selon ce deuxième mode de réalisation peut éventuellement comprendre d'autres polymères que le copolymère de propylène hétérophasique et le polypropylène homophasique. Ces autres polymères sont de préférence des polymères thermoplastiques, généralement présent à hauteur de moins de 20% en poids, plus préférentiellement moins de 15% en poids par rapport au poids total des polymères de la composition. Selon une variante possible, la composition polymère peut par exemple comprendre une faible proportion d'un polymère d'éthylène homophasique, typiquement à hauteur de moins de 20% en poids, par exemple entre 0,1 et 10%, en poids par rapport au poids total des polymères de la composition. Selon une autre variante, la composition polymère est sensiblement exempte de polymère d'éthylène homophasique (voire totalement exempte de polymère d'éthylène homophasique) avec une teneur en polymère d'éthylène homophasique inférieure à 0,5% en poids par rapport au poids total des polymères de la composition, cette teneur étant de préférence inférieure à 0,1%, voire nulle)

Les travaux effectués par les inventeurs dans le cadre de la présente invention ont maintenant permis de mettre en évidence qu'une couche isolante à base d'un copolymère de propylène hétérophasique tel qu'employé dans les conditions de l'invention (notamment selon les premier et deuxième modes de réalisation précités) s'avère adapté dans un câble basse tension, y compris pour fonctionner à des températures dépassant 70°C, et que la couche isolante possède des propriétés électriques et thermomécaniques intéressantes, avec en outre de bonnes performances en termes de flexibilité.

Différentes caractéristiques de l'invention et différentes variantes envisageables sont décrits plus en détails ci-après.

### Le polymère de propylène hétérophasique

La composition polymère à partir de laquelle est formée la couche isolante du câble de l'invention comprend spécifiquement un copolymère de propylène de nature hétérophasique. Ce copolymère de propylène, dit « hétérophasique » (ou également « hétérophasé »), comprend deux phases distinctes, avec typiquement :
- une phase continue thermoplastique à base de polypropylène (il s'agit d'une matrice thermoplastique à base d'au moins un homo- ou co-polymère de propylène) ; et
- une phase élastomère (généralement à la fois élastomère et thermoplastique) dispersée dans cette phase (matrice) continue thermoplastique.

Ce mélange hétérophasique peut être introduit dans la composition à l'état d'un mélange hétérophasique préformé (typiquement sous la forme d'un mélange commercial biphasique, généralement désigné sous le terme de « copolymère hétérophasique » - dans ce cas, le mélange peut par exemple être introduit dans une extrudeuse sous la forme de granulés constitués chacun de ce mélange hétérophasique). Alternativement, les deux phases du mélange hétérophasique peuvent se former *in situ* suite au mélange de leurs polymères constitutifs dans les proportions conduisant à la dispersion de la phase élastomère dans la phase continue thermoplastique à base de polypropylène (par exemple en introduisant dans une extrudeuse (i) des granulés comprenant le premier polymère homophasique (ou un mélange homophasique de polymères) constitutif de la phase thermoplastique continue, et (ii) d'autres granulés ne comprenant pas le premier polymère et comprenant un second polymère homophasique (ou un second mélange homophasique de polymères) constitutif de la phase continue).

Le copolymère hétérophasique employé selon l'invention comprend au moins deux phases distinctes : l'une comprenant une matrice polymère, et l'autre comprenant typiquement des particules ou nodules dispersé(e)s dans cette matrice polymère. Ce type de polymère peut être facilement identifiable par des techniques bien connues de l'homme du métier, comme par exemple la microscopie électronique à balayage (MEB). Plus particulièrement, avec un grossissement x 10 000, il est classique d'observer lesdites particules ou nodules dispersé(e)s dans ladite matrice polymère, lesdites particules ayant avec une taille moyenne en nombre allant de 200 nm à 10 µm, par exemple entre 500 nm et 2 µm.

La phase thermoplastique constituant la matrice du copolymère de propylène hétérophasique représente en général entre 50 et 85% % en poids, avantageusement entre 55 et 80 % en poids et par exemple entre 55 et 75% en poids par rapport au poids total du copolymère de propylène hétérophasique.

La phase élastomère thermoplastique du copolymère de propylène hétérophasique représente avantageusement au moins 15% en poids, de préférence au moins 20% et par exemple au moins 30% et généralement moins de 50% en poids, par exemple moins de 45% en poids par rapport au poids total du copolymère de propylène hétérophasique.

Selon un premier mode de réalisation possible, la phase élastomère qui est dispersée dans phase continue thermoplastique à base de polypropylène comprend un copolymère élastomère d'éthylène et d'une oléfine α autre que l'éthylène, notamment un copolymère élastomère d'éthylène et de propylène.

Le copolymère de propylène hétérophasique employé selon ce premier mode de réalisation de préférence un module élastique allant de 50 à 1200 MPa environ, et de façon particulièrement préférée : soit un module élastique allant de 50 à 550 MPa environ, et de façon plus particulièrement préférée allant de 50 à 300 MPa environ.

Le copolymère de propylène hétérophasique employé selon ce premier mode de réalisation est en général introduit dans la composition polymère à l'état d'un mélange hétérophasique préformé. À titre d'exemple de copolymère de propylène hétérophasique préformé utile selon ce premier mode, on peut mentionner les copolymères de propylène hétérophasiques commercialisés par la société LyondellBasell sous les références Adflex^{®} Q 200 F, Hifax CA 10A, ou Hifax CA 12A.

Le polymère de propylène hétérophasique selon le premier mode décrit ci-dessus a de préférence une température de fusion supérieure à 140°C environ, de façon particulièrement préférée supérieure à 145°C environ, et de façon plus particulièrement préférée allant de 150 à 175°C environ.

Le polymère de propylène hétérophasique selon le premier mode décrit ci-dessus peut avoir une enthalpie de fusion allant de 20 à 100 J/g environ, et de préférence de 20 à 50 J/g environ.

Le polymère de propylène hétérophasique selon le premier mode décrit ci-dessus peut avoir un indice de fluidité allant de 0,5 à 5 g/10 min, et de préférence allant de 0,6 à 2 g/10 min environ ; notamment déterminé à 230°C environ avec une charge de 2,16 kg environ selon la norme ASTM D1238-00, ou la norme ISO 1133.

Le polymère de propylène hétérophasique selon le premier mode décrit ci-dessus peut avoir une densité allant de 0,81 à 0,92 g/cm³ environ, de préférence allant de 0,85 à 0,91 g/cm³, et de façon particulièrement préférée allant de 0,87 à 0,91 g/cm³ ; notamment déterminé selon la norme ISO 1183A (à une température de 23°C).

Selon un deuxième mode de réalisation possible, la phase élastomère qui dispersée dans phase continue thermoplastique à base de polypropylène comprend un copolymère élastomère d'éthylène et d'au moins un co-monomère porteur de groupe polaire. Selon ce mode de réalisation, la phase élastomère représente de préférence au plus 45% en poids (typiquement entre 25 et 45%) par rapport au poids total du copolymère de propylène hétérophasique, la matrice représentant au moins 55% en poids (typiquement entre 55 et 75%).

Le copolymère de propylène hétérophasique employé selon ce premier mode de réalisation peut éventuellement être introduit dans la composition polymère à l'état d'un mélange hétérophasique préformé. Alternativement, selon ce second mode de réalisation, la composition polymère peut être obtenue par un mélange de (i) l'homo- ou co-polymère de propylène constitutif de la phase continue à base de polypropylène (typiquement introduit dans une extrudeuse sous forme de premiers granulats) et (ii) du polymère élastomère d'éthylène et d'au moins un co-monomère porteur de groupe polaire (typiquement introduit dans une extrudeuse sous forme de second granulats distincts des premiers), auquel cas le mélange hétérophasique se forme *in situ* dans la composition (typiquement par fusion et mélange des granulats dans l'extrudeuse).

Le copolymère élastomère d'éthylène et d'au moins un monomères porteurs de groupes polaires utilisé dans le cadre du deuxième mode décrit ci-dessus peut notamment avoir une température de fusion inférieure à 110°C, par exemple inférieure ou égale à 100°C.

Le copolymère élastomère d'éthylène et d'au moins un monomères porteurs de groupes polaires utilisé dans le cadre du deuxième mode peut notamment être un polymère porteur d'une ou plusieurs fonctions polaires choisies parmi les groupements acétate, acrylate, hydroxyle, nitrile, carboxyle, carbonyle, éther, ester, silane et leurs mélanges. Un polymère d'éthylène homophasique à caractère polaire utile selon l'invention peut notamment être :
- un copolymère d'éthylène et d'acétate de vinyle (EVA) ;
- un copolymère d'éthylène et de butyle acrylate (EBA) ;
- un copolymère d'éthylène et d'éthyle acrylate (EEA) ;
- un copolymère d'éthylène et d'acrylate de méthyle (EMA) ;
- un copolymère d'éthylène et d'acide acrylique (EAA) ; ou
un mélange de ces composés.

### Le polymère de propylène homophasique additionnel (optionnel)

Au sens de la présente description, on entend par « polymère homophasique », un polymère se présentant sous la forme d'une unique phase, généralement une phase sensiblement homogène. Un tel polymère homophasique au sens de la présente description n'est pas un polymère hétérophasique, ce qui exclue par exemple les copolymères hétérophasiques de propylène du type de ceux décrits dans le document WO2011/092533, à savoir les copolymères Adflex Q200F ou Hifax CA 7441A (LyondellBasell).

Un tel polymère homophasique de propylène peut éventuellement être ajouté à la composition polymère, lorsque celle-ci inclut déjà un copolymère hétérophasique préformé. En d'autres termes, selon ce mode de réalisation, la composition polymère par un mélange de (i) un copolymère hétérophasique de propylène préformé et (ii) un copolymère homophasique de propylène **additionnel.** Le mélange des polymères (i) et (ii), initialement séparés, s'opère typiquement en mélangeant des premiers granulés comprenant le mélange hétérophasique (i) avec d'autres granulés comprenant le copolymère homophasique de propylène additionnel.

Selon un mode de réalisation possible, le polymère de propylène homophasique additionnel est un homopolymère de polypropylène.

Alternativement, selon un autre mode envisageable, le polymère de propylène homophasique est un copolymère de propylène.

À titre d'exemples de copolymères de propylène homophasique utilisable selon l'invention, on peut citer les copolymères de propylène et d'une oléfine autre que le propylène, cette oléfine pouvant notamment être choisie parmi l'éthylène ou une oléfine α différente du propylène.

L'oléfine autre que le propylène présente dans un copolymère de propylène homophasique utile selon l'invention représente de préférence au plus 45% en mole, de façon particulièrement préférée au plus 35% en mole, de façon plus particulièrement préférée au plus 20% en mole, et de façon plus particulièrement préférée au plus 10% en mole, par rapport à la quantité totale de monomères dans le copolymère de propylène homophasique. C'est en particulier le cas lorsque l'oléfine autre que le propylène est l'éthylène ou une oléfine α différente du propylène.

Selon un mode intéressant, l'oléfine autre que le propylène présente dans un copolymère de propylène homophasique utile selon l'invention représente au moins 1% en mole environ, par rapport au nombre de moles total de monomères dans le copolymère de propylène homophasique. C'est en particulier le cas lorsque l'oléfine autre que le propylène est l'éthylène ou une oléfine α différente du propylène.

La teneur molaire (pourcentage en en mole) de l'oléfine autre que le propylène présente dans un copolymère de propylène homophasique utile selon l'invention peut notamment être déterminée par résonance magnétique nucléaire (RMN), par exemple selon la méthode décrite dans Masson et al., Int. J. Polymer Analysis & Characterization, 1996, Vol.2, 379-393.

L'oléfine α différente du propylène présente dans un copolymère de propylène homophasique utile selon l'invention peut notamment répondre à la formule CH₂=CH-R¹, dans laquelle R¹ est un groupe alkyle linéaire ou ramifié ayant de 2 à 12 atomes de carbone, notamment choisie parmi les oléfines suivantes : 1-butène, 1-pentène, 4-méthyl-1-pentène, 1-hexène, 1-octène, 1-décène, 1-dodécène, et un de leurs mélanges.

Les copolymères de propylène et d'éthylène sont préférés à titre de copolymères de propylène homophasique.

Le copolymère de propylène homophasique est avantageusement un copolymère statistique.

À titre d'exemple de copolymère statistique homophasique de propylène utile selon l'invention, on peut citer celui commercialisé par la société Borealis sous la référence Bormed^{®} RB 845 MO, celui commercialisé par la société Total Petrochemicals sous la référence PPR 3221, celui commercialisé par la société Sabic sous la référence PP 620P, ou celui commercialisé par la société Repsol Isplen sous la référence RC530S2E.

Le polymère de propylène homophasique utile selon peut être caractérisé par son module élastique. Ce module élastique (ou module d'Young, également désigné par l'anglicisme « *Tensile Modulus* ») est bien connu de l'homme du métier, et peut être facilement déterminé selon la norme ISO 527-1, -2 (2012). La norme ISO 527 présente une première partie, notée « ISO 527-1 », et une deuxième partie, notée « ISO 527-2 » spécifiant les conditions d'essai relatives aux principes généraux de la première partie de la norme ISO 527.

Un homopolymère de propylène homophasique utile selon l'invention a de préférence un module élastique allant de 1250 à 1600 MPa.

Un copolymère de propylène homophasique utile selon l'invention a de préférence un module élastique allant de 600 à 1200 MPa, et de façon particulièrement préférée allant de 800 à 1100 MPa.

Par ailleurs, un polymère de propylène homophasique utile selon l'invention a avantageusement une température de fusion supérieure à 130°C, de façon particulièrement préférée supérieure à 135°C, et de façon plus particulièrement préférée allant de 140 à 175°C environ.

Un polymère de propylène homophasique utile selon l'invention peut par ailleurs avoir une enthalpie de fusion allant de 20 à 100 J/g environ. Lorsqu'il s'agit d'un homopolymère de propylène homophasique son enthalpie de fusion va de préférence de 80 à 90 J/g. Lorsqu'il s'agit d'un copolymère de propylène homophasique a de préférence une enthalpie de fusion allant de 40 à 90 J/g et de façon particulièrement préférée de 50 à 85 J/g.

Un polymère de propylène homophasique utile selon l'invention peut par ailleurs avoir un indice de fluidité allant de 0,5 à 3,5 g/10 min, de préférence allant de 1,0 à 2,8 g/10 min, et de façon particulièrement préférée allant de 1,2 à 2,5 g/10 min ; notamment déterminé à 230°C environ avec une charge de 2,16 kg environ selon la norme ASTM D1238-00, ou la norme ISO 1133.

Un polymère de propylène homophasique utile selon l'invention peut par ailleurs avoir une densité allant de 0,81 à 0,92 g/cm³ environ, de préférence allant de 0,85 à 0,91 g/cm³, et de façon particulièrement préférée allant de 0,87 à 0,91 g/cm³ ; notamment déterminé selon la norme ISO 1183A (à une température de 23°C).

Le polymère de propylène homophasique peut représenter de 55 à 90% en poids environ, et de façon particulièrement préférée de 60 à 80% en poids environ, par rapport au poids total de polymères dans la composition polymère.

### Le polymère d'éthylène homophasique additionnel (optionnel)

La composition polymère peut éventuellement résulter d'un mélange des polymères précédemment décrits (copolymère de propylène hétérophasique, plus éventuellement un polymère homophasique de polymère additionnel) avec un polymère d'éthylène homophasique additionnel présent en faible proportion, typiquement à hauteur de moins de 20% en poids par rapport au poids total des polymères de la composition.

Ce polymère d'éthylène homophasique additionnel, lorsqu'il est présent dans la composition, est typiquement un homopolymère ou un copolymère d'éthylène. Il comprend de préférence au moins 80% en mole environ d'éthylène, de façon particulièrement préférée au moins 90% en mole environ d'éthylène, et de façon plus particulièrement préférée au moins 95% en mole environ d'éthylène, par rapport au nombre de moles total de monomères dans le polymère d'éthylène.

Lorsqu'un tel polymère d'éthylène homophasique additionnel est présent, il a typiquement un module élastique d'au moins 300 MPa, de préférence un module élastique d'au moins 325 MPa, et de façon particulièrement préférée d'au moins 350 MPa. Ce module élastique reste en général inférieur ou égal à 600 MPa, par exemple inférieur ou égal à 500 MPa.

Lorsqu'un polymère d'éthylène homophasique est présent dans la composition, son indice de fluidité va avantageusement de 0,5 à 5 g/10 min, et de préférence de 1 à 3 g/10 min (l'indice de fluidité auquel il est fait référence ici est celui déterminé à 230°C environ avec une charge de 2,16 kg selon la norme ASTM D1238-00, ou la norme ISO 1133).

Lorsqu'un polymère d'éthylène homophasique est présent dans la composition, il peut par exemple s'agir d'un polyéthylène basse densité, un polyéthylène linéaire basse densité, un polyéthylène moyenne densité, ou un polyéthylène haute densité ; notamment selon la norme ISO 1183A (à une température de 23°C).

Dans la présente description, l'expression « polyéthylène basse densité » désigne un polymère d'éthylène homophasique ayant une densité allant de 0,91 à 0,925 g/cm³ environ, ladite densité étant mesurée selon la norme ISO 1183A (à une température de 23°C).

Dans la présente description, l'expression « polyéthylène moyenne densité » désigne un polymère d'éthylène homophasique ayant une densité allant de 0,926 à 0,940 g/cm³ environ, ladite densité étant mesurée selon la norme ISO 1183A (à une température de 23°C).

Dans la présente description, l'expression « polyéthylène haute densité » désigne un polymère d'éthylène homophasique ayant une densité allant de 0,941 à 0,965 g/cm³, ladite densité étant mesurée selon la norme ISO 1183A (à une température de 23°C).

Lorsqu'un polymère d'éthylène homophasique est présent dans la composition, il peut avantageusement s'agir d'un polyéthylène ayant une densité d'au plus 0,936 g/cm³, de façon particulièrement préférée d'au plus 0,930 g/cm³, et de façon plus particulièrement préférée d'au plus 0,925 g/cm³ ; ladite densité étant notamment mesurée selon la norme ISO 1183A (à une température de 23°C), et le polymère d'éthylène homophasique est alors avantageusement un polyéthylène basse densité, un polyéthylène linéaire basse densité, ou un polyéthylène moyenne densité, et de façon particulièrement préférée un polyéthylène linéaire basse densité.

À titre d'exemple de polyéthylène linéaire basse densité, on peut citer celui commercialisé par la société Exxon sous la référence LL 1004YB, celui commercialisé par la société Sabic sous la référence 318B, ou celui commercialisé par la société Versalis sous la référence Flexirene CL 10.

Le polymère d'éthylène homophasique, lorsqu'il est présent est typiquement présent à une teneur entre 0,1 et 20%, par exemple entre 0,5 et 10% en poids par rapport au poids total des polymères de la composition.

Lorsque la composition comprend un polymère d'éthylène homophasique, elle comprend en général systématiquement aussi un polymère de propylène homophasique, avec une proportion massique (i.e. une quantité en poids) du polymère de propylène homophasique qui reste de préférence strictement supérieure à la proportion massique (i.e. la quantité en poids) du polymère d'éthylène homophasique, par rapport au poids total de polymères dans la composition polymère.

### Eventuels autres polymères

La composition polymère à partir de laquelle est formée la couche isolante du câble de l'invention peut éventuellement comprendre d'autres polymères en plus des polymères précités.

Cependant, selon une forme de réalisation préférée de l'invention, la composition polymère comprend moins de 20% (par exemple moins de 15%, voire moins de 10%) en poids de polymère autres qu'un copolymère de propylène hétérophasique, un polymère de propylène homophasique, ou un polymère d'éthylène homophasique par rapport au poids total de polymères dans la composition.

Par ailleurs, la composition polymère à partir de laquelle est formée la couche isolante du câble de l'invention est une composition polymère thermoplastique. Elle n'est donc pas réticulable. La couche isolante du câble de l'invention est elle aussi une couche polymère thermoplastique, qui n'est donc pas réticulée.

En particulier, la composition polymère à partir de laquelle est formée la couche isolante du câble de l'invention ne comprend pas d'agents de réticulation, d'agents de couplage de type silane, de peroxydes et/ou d'additifs qui permettent une réticulation.

Par ailleurs, il est préférable que la composition polymère à partir de laquelle est formée la couche isolante du câble de l'invention ne comprenne pas de polymères d'oléfine greffés avec des fonctions réticulables, tels que par exemple de polymères d'oléfine vinyl silane.

Compte tenu de son caractère thermoplastique, la couche isolante du câble de l'invention présente en général l'avantage d'être recyclable.

### Additifs optionnels

La composition polymère à partir de laquelle est formée la couche isolante du câble de l'invention peut éventuellement comprendre un ou plusieurs additifs en plus des polymères précités.

Ces additifs peuvent notamment être choisis parmi des agents favorisant la mise en œuvre tels que des lubrifiants, des agents compatibilisants, des agents de couplage, des antioxydants, des agents anti-UV, des antioxydants, des agents anti-cuivre, des agents anti-arborescences d'eau, des pigments, et leurs mélanges.

La composition polymère comprend de préférence au moins un antioxydant et/ou au moins un agent anti-cuivre (également appelé désactivateur de métaux).

La composition polymère peut typiquement comprendre de 0,01 à 5% en poids environ, et de préférence de 0,1 à 2% en poids environ d'additifs, par rapport au poids total de la composition polymère.

Les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine, et un de leurs mélanges.

À titre d'exemples de phénols encombrés, on peut citer le 1,2-bis(3,5-di-tert-butyl-4-hydroxyhydrocinnamoyl) hydrazine (Irganox^{®} MD 1024), le pentaérythritol tétrakis(3-(3,5-di-*tert*-butyl-4-hydroxyphényl)propionate) (Irganox^{®} 1010), l'octadécyl 3-(3,5-di-*tert*-butyl-4-hydroxyphényl)propionate (Irganox^{®} 1076), le 1,3,5-triméthyl-2,4,6-tris(3,5-di-*tert*-butyl-4-hydroxybenzyl)benzène (Irganox^{®} 1330), le 4,6-bis (octylthiométhyl)-o-crésol (Irgastab^{®} KV10 ou Irganox^{®} 1520), le 2,2'-thiobis(6-*tert*-butyl-4-méthylphénol) (Irganox^{®} 1081), le 2,2'- thiodiéthylène bis[3-(3,5-di-*tert*-butyl-4-hydroxyphényl) propionate] (Irganox^{®} 1035), le tris (3,5-di-*tert*-butyl-4-hydroxybenzyl) isocyanurate (Irganox^{®} 3114), le 2,2'-oxamido-bis(éthyl-3(3,5-di-*tert*-butyl-4-hydroxyphényle)propionate) (Naugard XL-1), ou le 2,2'-méthylènebis(6-*tert*-butyl-4-méthylphénol).

À titre d'exemples d'antioxydants à base de soufre, on peut citer les thioéthers tels que le didodécyl-3,3'-thiodipropionate (Irganox^{®} PS800), le distéaryl thiodipropionate ou dioctadecyl-3,3'-thiodipropionate (Irganox^{®} PS802), le bis [2-méthyle-4-{3-n-alkyle (C₁₂ ou C₁₄) thiopropionyloxy}-5-*tert-*butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox^{®} 1520 ou Irgastab^{®} KV10).

À titre d'exemples d'antioxydants à base de phosphore, on peut citer le tris(2,4-di-*tert*-butyl-phényle) phosphite (Irgafos^{®} 168) ou le bis(2,4-di-*tert-*butylphényl)pentaérythritol diphosphite (Ultranox^{®} 626).

À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl) -N-[4-(1-méthyl-1-phényléthyl)phényl]aniline (Naugard 445), les mercapto benzimidazoles, ou le 2,2,4-triméthyl-1,2 dihydroquinoline polymérisé (TMQ).

À titre d'exemples de mélanges d'antioxydants utilisables selon l'invention, on peut citer l'Irganox B 225 qui comprend un mélange équimolaire d'Irgafos 168 et d'Irganox 1010 tels que décrits ci-dessus.

Le désactivateur de métal peut être choisi parmi les hétérocycles aromatiques azotés, et les composés aromatiques comprenant au moins une fonction -NH-C(=O)-, et de préférence parmi les composés aromatiques comprenant au moins une fonction -NH-C(=O)-. La présence de l'oxygène dans le désactivateur de métal est importante pour pouvoir immobiliser durablement les ions métalliques.

Le désactivateur de métal est de préférence différent d'une amine encombrée. En d'autres termes, le désactivateur de métal ne comprend pas de préférence un ou plusieurs groupements tétraméthylpipéridine.

À titre d'exemples d'hétérocycliques aromatiques azotés, on peut citer les dérivés de la quinoline tels que les 2,2,4-triméthyl-1,2 dihydroquinolines polymérisées (TMQ).

À titre d'exemples de composés aromatiques comprenant au moins une fonction -NH-C(=O)-, on peut citer ceux comprenant deux fonctions -NH-C(=O)-, de préférence comprenant deux fonctions -NH-C(=O)- liées de façon covalente, et de façon plus particulièrement préférée comprenant un groupe divalent -NH-C(=O)-C(=O)-NH- ou -C(=O)-NH-NH-C(=O)-, tels que le 2,2' oxamidobis-[éthyl-3-(3,5-di-tert-butyl-4-hydroxyphényl) propionate] (Naugard XL-1), le 2',3-bis[[3-[3,5-di-tert-butyl-4-hydroxy phenyl]propionyl]] propionohydrazide ou 1,2-bis(3,5-di-tert-butyl-4-hydroxyhydrocinnamoyl) hydrazine (Irganox^{®} 1024 ou Irganox^{®} MD 1024), ou l'oxalyl bis(benzylidenehydrazide) (OABH).

Certains désactivateurs de métaux sont également des antioxydants.

Puisque la couche isolante du câble de l'invention est destinée à une application basse tension, la composition polymère à partir de laquelle est formée la couche isolante est exempte de liquide diélectrique, notamment de liquides choisis parmi une huile minérale (e.g. huile naphténique, huile paraffinique ou huile aromatique), une huile végétale (e.g. huile de soja, huile de lin, huile de colza, huile de maïs ou huile de ricin), une huile synthétique telle qu'un hydrocarbure aromatique (alkylbenzène, alkylnaphtalène, alkylbiphényle, alkydiaryléthylène, par exemple), une huile de silicone, un éther-oxyde, un ester organique, et un hydrocarbure aliphatique.

### La couche électriquement isolante

La couche électriquement isolante du câble de l'invention, obtenue à partir de la composition polymère défini dans les paragraphes précédents, est une couche thermoplastique, de préférence non réticulée.

Au sens de la présente description, l'expression « couche non réticulée » désigne une couche dont le taux de gel selon la norme ASTM D2765-01 (extraction au xylène) est de préférence d'au plus 30% environ, de préférence d'au plus 20% environ, de façon particulièrement préférée d'au plus 10% environ, de façon plus particulièrement préférence d'au plus 5%, et de façon encore plus particulièrement préférée de 0%.

La couche électriquement isolante du câble de l'invention, de préférence non réticulée, présente une résistance à la traction (RT) d'au moins 8,5 MPa, de préférence d'au moins 10 MPa environ, et de façon particulièrement préférée d'au moins 15 MPa environ, avant vieillissement (selon la norme CEI 20-86).

Selon un mode de réalisation particulier, la couche électriquement isolante, de préférence non réticulée, présente une élongation à la rupture (ER) d'au moins 250% environ, de préférence d'au moins 300% environ, et de façon particulièrement préférée d'au moins 350% environ, avant vieillissement (selon la norme CEI 20-86).

Dans un mode de réalisation particulier, la couche électriquement isolante, de préférence non réticulée, présente une résistance à la traction (RT) d'au moins 8,5 MPa, de préférence d'au moins 10 MPa environ, et de façon particulièrement préférée d'au moins 15 MPa environ, après vieillissement (selon la norme CEI 20-86.

Dans un mode de réalisation particulier, la couche électriquement isolante, de préférence non réticulée, présente une élongation à la rupture (ER) d'au moins 250% environ, de préférence d'au moins 300% environ, et de façon particulièrement préférée d'au moins 350% environ, après vieillissement (selon la norme CEI 20-86).

La résistance à la traction (RT) et l'élongation à la rupture (ER) (avant ou après vieillissement) peuvent être effectués selon la Norme NF EN 60811-1-1, notamment à l'aide d'un appareil commercialisé sous la référence 3345 par la société Instron.

Le vieillissement est généralement effectué à 135°C pendant 240 heures (ou 10 jours).

La couche électriquement isolante du câble de l'invention est de préférence une couche recyclable.

La couche électriquement isolante de l'invention peut être une couche extrudée, notamment par des procédés bien connus de l'homme du métier.

La couche électriquement isolante présente une épaisseur variable en fonction du type de câble envisagé. En particulier, puisque le câble conforme à l'invention est un câble à basse tension, l'épaisseur de la couche électriquement isolante est généralement de 1 à 2 mm environ. Les épaisseurs précitées dépendent de la taille de l'élément électriquement conducteur allongé.

Dans la présente invention, on entend par « couche électriquement isolante » une couche dont la conductivité électrique peut être d'au plus 1.10⁻⁸ S/m (siemens par mètre), de préférence d'au plus 1.10⁻⁹ S/m, et de façon particulièrement préférée d'au plus 1.10⁻¹⁰ S/m, mesurée à 25°C environ en courant continu.

La couche électriquement isolante de l'invention peut comprendre au moins le polymère de propylène homophasique, au moins le polymère d'éthylène homophasique, éventuellement le polymère de propylène hétérophasique, les ingrédients précités étant tels que définis dans l'invention.

Les proportions des différents ingrédients dans la couche électriquement isolante peuvent être identiques à celles telles que décrites dans l'invention pour ces mêmes ingrédients dans la composition polymère.

Le câble de l'invention concerne plus particulièrement le domaine des câbles électriques fonctionnant en courant continu (DC) ou en courant alternatif (AC).

### Le câble employant la couche isolante de l'invention

De préférence, la couche électriquement isolante de l'invention, obtenue à partir de la composition polymère défini dans les paragraphes précédents, entoure l'élément électriquement conducteur allongé.

L'élément électriquement conducteur allongé est typiquement positionné au centre du câble.

L'élément électriquement conducteur allongé peut être un conducteur monocorps comme par exemple un fil métallique ou un conducteur multicorps tel qu'une pluralité de fils métalliques torsadés (toronés entre eux) ou non.

L'élément électriquement conducteur allongé peut notamment être en aluminium, en alliage d'aluminium, en cuivre, en alliage de cuivre, ou en une de leurs combinaisons.

Le câble peut comprendre en outre une gaine extérieure de protection entourant la couche électriquement isolante.

La gaine extérieure de protection peut être en contact physique direct avec la couche électriquement isolante.

La gaine extérieure de protection peut être une gaine électriquement isolante.

Selon l'invention, la couche électriquement isolante est directement en contact physique avec l'élément électriquement conducteur allongé.

De manière avantageuse, le câble de l'invention est un câble basse tension. Un câble selon l'invention ne comprend pas, en général de couche semiconductrice.

### Brève description des dessins

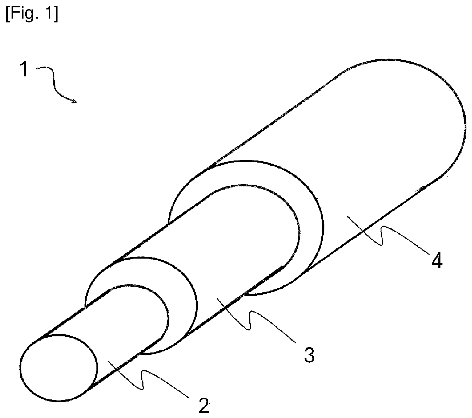

[Fig. 1] La figure 1 représente un câble conforme à l'invention.

Pour des raisons de clarté, seuls les éléments essentiels pour la compréhension de l'invention ont été représentés de manière schématique, et ceci sans respect de l'échelle.

La Figure 1 représente un câble électrique 1 à basse tension conforme à l'invention, qui comprend un élément électriquement conducteur 2 allongé central, notamment en cuivre ou en aluminium ou en un de leurs alliages. Le câble électrique 1 comprend en outre une couche 3 électriquement isolante, et éventuellement une gaine extérieure de protection 4.

La couche électriquement isolante 3 est une couche extrudée non réticulée, obtenue à partir d'une composition polymère selon l'invention.

La présence de la gaine extérieure de protection 4 est préférentielle, mais non essentielle selon l'invention.

## Revendications

1. Câble électrique (1) de transport d'énergie basse tension comprenant au moins une couche électriquement isolante (3) entourant au moins un élément électriquement conducteur allongé (2), où la couche électriquement isolante est directement en contact physique avec l'élément électriquement conducteur allongé, où ladite couche isolante (3) est obtenue à partir d'une composition polymère thermoplastique exempte de liquide diélectrique, la composition comprenant plus de 10% en poids d'un copolymère de propylène hétérophasique par rapport au poids total de polymères dans la composition polymère thermoplastique, ledit copolymère de propylène hétérophasique comprenant :
- une phase continue thermoplastique à base d'au moins un homo- ou copolymère de propylène ; et
- une phase élastomère dispersée dans cette phase continue thermoplastique.

2. Câble électrique selon la revendication 1, où la couche isolante (3) est obtenue à partir d'une composition polymère thermoplastique comprenant au moins 90% en poids, par exemple au moins 95% en poids, de copolymère de propylène hétérophasique par rapport au poids total de polymères dans la composition polymère hétérophasique.

3. Câble électrique selon la revendication 2, où la couche isolante (3) est obtenue à partir d'une composition polymère thermoplastique comprenant le copolymère de propylène hétérophasique à titre d'unique polymère.

4. Câble électrique selon la revendication 1, où la couche isolante (3) est obtenue à partir d'une composition polymère thermoplastique obtenue par mélange du copolymère de propylène hétérophasique avec un polymère de propylène homophasique.

5. Câble électrique selon la revendication 4, où la composition polymère comprend le copolymère de propylène hétérophasique à une teneur de 15% à 90% en poids.

6. Câble électrique (1) selon l'une des revendications 1 à 5 où la phase élastomère dispersée comprend un copolymère élastomère d'éthylène et d'une oléfine α autre que l'éthylène, notamment un copolymère élastomère d'éthylène et de propylène.

7. Câble électrique (1) selon l'une des revendications 1 à 5, où ladite phase élastomère dispersée comprend un copolymère élastomère d'éthylène et d'au moins un co-monomère porteur de groupe polaire.

8. Câble électrique selon l'une des revendications 1 à 7, où la phase élastomère thermoplastique dispersée représente de 15% à 50% en poids, par exemple de 15% à 45% en poids par rapport au poids total du copolymère de propylène hétérophasique.

9. Câble électrique selon l'une des revendications 1 à 8, où la phase thermoplastique du copolymère de propylène hétérophasique représente entre 50 et 85% % en poids, par exemple entre 55 et 75 % par rapport au poids total du copolymère de propylène hétérophasique.

10. Câble électrique selon l'une quelconque des revendications 1 à 9, où la couche électriquement isolante est une couche non réticulée.

11. Câble électrique selon l'une quelconque des revendications 1 à 10, qui comprend en outre une gaine extérieure de protection (4) entourant la couche électriquement isolante.
